# EUROPÄISCHE PATENTSCHRIFT

(11) **EP 2 505 328 B1**
(45) Veröffentlichungstag und Bekanntmachung des Hinweises auf die Patenterteilung: **01.10.2014**
(21) Anmeldenummer: 12001976.5
(22) Anmeldetag: 21.03.2012
(51) Int. Cl.: B29C 44/12, B29C 44/34, C08J 9/00

(54) **Verfahren zur Herstellung einer geschäumten Kunststoffplatte und nach dem Verfahren herstellbare Kunststoffplatte**
Method for producing a foamed plastic board and plastic board produced according to the method
Procédé de fabrication d'une plaque en matière synthétique expansée et plaque en matière synthétique pouvant être fabriquée selon ce procédé

(30) Priorität: 28.03.2011 DE 102011015511
(43) Veröffentlichungstag der Anmeldung: 03.10.2012
(73) Patentinhaber: VPW Nink GmbH, 06526 Sangerhausen (DE)
(72) Erfinder: Deinert, Jürgen, 37115 Duderstadt (DE); Würz, Peter, 48712 Gescher (DE)
(74) Vertreter: Lins, Edgar

(56) Entgegenhaltungen:
- EP-A2- 0 148 693

## Beschreibung

Die Erfindung betrifft ein Verfahren zur Herstellung einer geschäumten Kunststoffplatte aus PVC oder aus Blends aus PVC mit PVC-C, PVC mit styrolhaltigen Copolymeren oder PVC mit Polyacrylaten, wobei der PVC-Anteil mindestens 10 % beträgt und die Kunststoffplatte eine geschlossenzellige Struktur und eine Dichte < 70 % der Dichte der ungeschäumten Formmasse aufweist.

Die Erfindung betrifft ferner eine nach dem Verfahren herstellbare geschäumte Kunststoffplatte.

Derartige geschäumte Kunststoffplatten werden insbesondere als Bauelemente verwendet. Zur Erhöhung der Stabilität werden die Kunststoffplatten profiliert, beispielsweise mit einem sinusförmigen oder trapezförmigen Profil oder auch aus einer Kombination einer Profilform mit flachen Abschnitten oder Abschnitten einer anderen Profilform.

Derartige Platten werden beispielsweise im Außenbereich als Wetterschutz verwendet und können beispielsweise ein gewelltes Dach oder eine gewellte Seite eines Gebäudes oder eines Gebäudeteils bilden.

Die Verwendung von geschäumten Kunststoffplatten hat den Vorteil, dass sich das Gewicht der Platten deutlich reduzieren lässt. Für die Schaumbildung wird dem Material der Kunststoffplatte im ungeschmolzenen Zustand (beispielsweise Granulat oder Pulver) oder im geschmolzenen Zustand ein physikalisches oder chemisches Treibmittel zugegeben. Beim Urformen der Kunststoffplatte durch Aufschmelzen des Materials setzt das als Feststoff zugegebene chemische Treibmittel aufgrund einer chemischen Reaktion Gase frei, die sich in dem geschmolzenen Material verteilen. Die dabei entstehenden Gasbläschen können in ihrer ganz überwiegenden Anzahl im Material gehalten werden, um so eine geschlossenzellige Struktur der Kunststoffplatte zu erzeugen, wodurch eine erhöhte Wetterfestigkeit der Kunststoffplatte gewährleistet wird. Die geschlossenzellige Struktur bezieht sich für die Zwecke der vorliegenden Anmeldung auf die geschlossenzellige Schaumstruktur und/oder die geschlossenzellige Oberflächenstruktur.

Bei der Verwendung von physikalischen Treibmitteln wird üblicherweise das Treibmittel in flüssiger oder gasförmiger Form in das geschmolzene Material unter Druck eingespritzt, und durch einen Mischvorgang für möglichst gute Verteilung des Treibmittels in dem Kunststoffmaterial gesorgt. Durch die Erwärmung des Kunststoffmaterials wird ein flüssiges Treibmittel gasförmig oder expandiert ein gasförmiges Treibmittel, wodurch der gewünschte Aufschäumvorgang stattfindet. Um die Verteilung der Gasbläschen des physikalischen Treibmittels zu verbessern, ist es bekannt, dem Kunststoffmaterial als Additiv kleine Partikel zuzugeben, die als Keimbildner für die Gasbläschen fungieren. Als solche Keimbildner sind Talkum, Kalziumcarbonat, Kalziumsulfat, Magnesiumkarbonat, Magnesiumhydroxid, Magnesiumsulfat, Tonerde, Bariumsulfat usw. bekannt.

In EP0148693 wird ein Verfahren zur Herstellung eines zellulären geschäumten Körpers aus PVC offenbart. Es besteht aus einführen einer Mischung von PVC und ein zersetzbaren Treibmittels oder eines feinen pulverförmigen Materials in einen Extruder, imprägnieren der erweichten schäumbaren Zusammensetzung mit einem verdampfbaren Treibmittel und extrudieren. Die spezifische Oberfläche des feinen pulverförmigen Materials wird in EP0148693 nicht angegeben.

Es hat sich jedoch herausgestellt, dass die nach herkömmlichen Verfahren mit physikalischen oder chemischen Treibmittel hergestellten Kunststoffschaumplatten eine verringerte Stabilität, insbesondere gegen Wettereffekte aufweist. Die Hagelschlagfestigkeit ist bei Schaumdichten unterhalb von 70 % der Dichte der eingesetzten Formmasse deutlich reduziert. Darüber hinaus besteht das Problem, dass größere Gasblasen thermodynamisch stabiler sind als kleinere Glasbläschen und daher zu Lasten der kleinen Gasblasen schneller wachsen und schließlich kollabieren. Die dadurch verschlechterte Oberflächenqualität bedingt eine schnellere Verschmutzung der Profilplatten im Außeneinsatz.

Der Erfindung liegt die Aufgabe zugrunde, die Herstellung einer geschäumten Kunststoffplatte der eingangs erwähnten Art mit gleichmäßig verteilten kleinen Gasbläschen so zu ermöglichen, dass die Schaumdichte weniger als 70 % der Dichte der ungeschäumten Formmasse beträgt, vorzugsweise eine geschlossenzellige Struktur erzielt wird und die Kunststoffplatten auch im geschäumten Zustand eine gegenüber dem ungeschäumten Zustand praktisch unveränderte Hagelschlagbeständigkeit aufweist.

Zur Lösung dieser Aufgabe ist bei einem Verfahren der eingangs erwähnten Art erfindungsgemäß vorgesehen, dass der Formmasse wenigstens ein chemisches Treibmittel und wenigstens ein physikalisches Treibmittel sowie Kalziumcarbonat mit einer spezifischen Oberfläche von 2: 36 m²/cm³ zugesetzt wird.

Die erfindungsgemäße Kombination der Zugabe eines physikalischen Treibmittels und eines chemischen Treibmittels und von Kalziumcarbonat als Keimbildner hat für die Herstellung einer geschäumten Kunststoffplatte einen nicht vorhersehbaren positiven Effekt. Die Kombination von physikalischen und chemischen Treibmittel löst prinzipiell nicht das Problem, dass große Gasblasen thermisch dynamisch stabiler sind und daher zu Lasten kleiner Gasblasen schneller wachsen und schließlich kollabieren, wodurch die Plattenmechanik und damit auch die Hagelschlagfestigkeit bei Schaumdichten unterhalb von 70 % der Dichte der eingesetzten Formmasse deutlich beeinträchtigt werden. Die Zugabe von Kalziumcarbonat mit einer spezifischen Oberfläche von mindestens 36 m²/cm³ hat zur Folge, dass ausreichend schnell Gasblasen durch beide Treibmittel entstehen können, sodass der physikalische und der chemische Schaumbildungsprozess unabhängig voneinander und parallel ablaufen können, wodurch die Vorteile beider Verfahren ausgenutzt werden können. Das chemische Schäumen führt in Verbindung mit dem zugegebenen Kalziumcarbonat, das vorzugsweise gefälltes Kalziumcarbonat ist, im Kern der Kunststoffplatte zu einer feinzelligen Struktur. In diesem Bereich kühlt der Werkstoff langsamer ab, wodurch die Gasblasen stärker wachsen als im Randbereich. Im Randbereich ist dagegen die chemische Schaumbildung eingeschränkt. Physikalische Treibmittel neigen dagegen aufgrund der chemischen Unverträglichkeit dazu, nach außen zu diffundieren, wodurch bei der erfindungsgemäßen Verwendung von Kalziumcarbonat in den Randbereichen ebenfalls zu einer feinzelligen Schaumstruktur kommt. Die Treibmittel führen somit in Verbindung mit dem Kalziumcarbonat zu einer vorteilhaften Oberflächentopologie und einer hohen Gasblasenhomogenität im Material der Kunststoffplatte bis in die Randbereiche hinein. Diese Gasblasenhomogenität ist mit einem chemischen Treibmittel oder einem physikalischen Treibmittel allein nicht herstellbar. Das erfindungsgemäße Kalziumcarbonat mit der hohen spezifischen Oberfläche von ≥ 36 m²/cm³ trägt überraschenderweise zur Gasblasenhomogenität sowohl für die beim physikalischen Schäumen gebildeten Gasblasen als auch für die mit einem chemischen Schaumvorgang gebildeten Gasblasen bei. Dieser Effekt kann darauf zurückgeführt werden, dass das eingesetzte Kalziumcarbonat aufgrund seiner großen spezifischen Oberfläche bei der Verarbeitung von PVC entstehendes Chlorwasserstoffgas (HCl) bindet und zu CO₂ umwandelt. Auf diese Weise sind die porösen Kalziumcarbonat-Teilchen an ihrer Oberfläche mit CO₂-Gas versehen, das dann als Keim für die weitere Anlagerung von Gas, das sich aufgrund der Treibmittel in der Polymermasse befindet, dient. Im Gegensatz zu anderen Keimbildnern, bei denen sich erst eine Gasschicht anlagern muss, damit das Gasbläschen in der gewünschten Weise wächst, ist bei dem erfindungsgemäß eingesetzten Kalziumcarbonat mit der großen spezifischen Oberfläche das CO₂-Gas an der Oberfläche bereits vor dem Wirksamwerden der Treibmittel aufgrund des bei der PVC-Verarbeitung immer vorhandenen Chlorwasserstoffgases (umgesetzt zu CO₂) vorhanden. Hieraus ergibt sich somit eine Beschleunigung - und somit höhere Wirksamkeit - der Keimbildungswirkung.

Für den Schäumungsprozess ist es vorteilhaft, wenn die spezifische Oberfläche des Kalziumcarbonats > 50 m²/cm³ beträgt. Allerdings erfordert die Verwendung eines solchen Kalziumcarbonats eine besondere Sorgfalt für das homogene Einarbeiten in die Thermoplastschmelze.

Vorzugsweise wird für die vorliegende Erfindung synthetisch hergestelltes, also gefälltes Kalziumcarbonat mit einer spezifischen Oberfläche ≥ 40 m²/cm³ verwendet. Es ist aber möglich, jedenfalls einen Teil des Kalziumcarbonats, durch natürlich vorkommende Kreide zu ersetzen, wenn die Kreide mindestens eine spezifische Oberfläche von 36 m²/cm³ aufweist. Der Grund dafür, dass für natürlich vorkommende Kreide eine etwas geringere spezifische Oberfläche aufreichend ist, liegt darin, dass die Kreide als natürliches Produkt Verunreinigungen, wie z. B. Metalloxide, aufweist, die den Keimbildungsprozess unterstützen, also die Wirkung des Kalziumcarbonats verstärken.

Als physikalisch wirkende Treibmittel können auch expandierbare Mikrokugeln eingesetzt werden, die eine thermoplastische Kunststoffhülle mit einem mit flüssigen oder gasförmigen Kohlenwasserstoffen gefüllten Kern aufweisen. Durch die Erwärmung beim Schmelzen des Kunststoffmaterials wird die Hülle der expandierbaren Mikrokugeln weit und dehnbar. Die Erwärmung führt zu einer Ausdehnung des fluiden Kernmaterials, und zwar nur die Volumenvergrößerung durch die Temperaturerhöhung des gasförmigen Kerns oder durch den Übergang von der flüssigen in die gasförmige Phase. Die thermoplastische Kunststoffhülle wird durch den sich ausdehnenden Kern gedehnt und behält ihre expandierte Form, wenn sich die Mikrokugeln nach dem Schäumvorgang abkühlen.

Sofern durch die Temperaturführung dafür gesorgt wird, dass die Mikrokugeln nicht platzen, lässt sich mit den Mikrokugeln eine homogene Verteilung von geschlossenen Poren innerhalb des Kunststoffmaterials erzeugen. Erfindungsgemäß wird dieses physikalische Treibmittel ergänzt durch ein geeignetes chemisches Treibmittel, dessen homogene Verteilung durch das erfindungsgemäße eingesetzte Kalziumcarbonat sichergestellt wird.

Es ist bevorzugt, mehr chemisches Treibmittel als physikalisches Treibmittel einzusetzen. Das Verhältnis von chemischem Treibmittel zu physikalischem Treibmittel beträgt bevorzugt ≥ 3, weiter bevorzugt ≥ 5.

Chemisches Treibmittel wird - ebenso wie physikalisches Treibmittel - vorzugsweise in einer Konzentration von 0,2 bis 1,0 %, bezogen auf das Kunststoffmaterial der Kunststoffplatte, eingesetzt. Für das erfindungsgemäß eingesetzte Kalziumcarbonat ist eine Konzentration von 0,07 bis 0,5 %, bezogen auf den Anteil des Kunststoffmaterials, bevorzugt.

Das Kunststoffmaterial wird vorzugsweise als Blend, vorzugsweise Trockenblend, aus PVC-U mit PVC-C, PVC-U mit styrolhaltigen Copolymeren oder PVC-U mit Polyacrylat gebildet, wobei der PVC-Anteil in dem Blend mindestens 10 % beträgt, vorzugsweise aber die Nicht-PVC-Anteile überwiegt. Die Blendpartner für das PVC haben vorzugsweise einen Schmelzfließindex (MFI) bei 220°C und 10 kg Masse zwischen 15 und 45 g/10 min.

Das eingesetzte PVC kann in den herkömmlichen Verfahren als E-PVC, M-PVC oder S-PVC hergestellt sein. Erfindungsgemäß kann auch ein Gemisch dieser PVC-Typen eingesetzt werden, wobei der K-Wert (mittlere Molmasse) der PVC-Komponente < 70 ist, wodurch die Schaumstruktur und die Fähigkeit beeinflusst wird, mit Blendpartnern homogene Mischungen auszubilden.

Als styrolhaltiges Copolymer kann insbesondere ABS (Acrylnitril-Butadien-Styrol), ASA (Acrylnitril-Styrol-Acrylester) SAN (Styrol-Acrylnitril) oder SMA (Styrol-Maleinsäureanhydrid) eingesetzt werden.

Als Polyacrylat-Blend kommt insbesondere PMMA (Polymethylmethacrylat) in Frage.

Die erfindungsgemäße geschäumte Kunststoffplatte ist vorzugsweise mit einer üblichen Profilierung einer Wellplatte ausgebildet. Die Profilierung kann sinusförmig oder trapezförmig sein, aber auch aus Abschnitten unterschiedlicher Profilierungen oder einer Profilierung mit glatten Zwischenabschnitten bestehen.

Die erfindungsgemäß hergestellte Kunststoffplatte kann einseitig oder beidseitig mit einer unverschäumten oder geschäumten Deckschicht aus Polymeren und Blends, wie z. B. PVC, ASA (Acrylnitril-Styrol-Acrylester) PMMA oder SAN versehen sein. Die entsprechenden Deckschichten können auf die geschäumte Kunststoffplatte auflaminiert werden. Bevorzugt ist allerdings eine Koextrusion der Deckschicht mit der geschäumten Kunststoffplatte.

Die erfindungsgemäß hergestellte Kunststoffplatte zeichnet sich gegenüber den bisherigen geschäumten Kunststoffplatten durch eine bisher nicht erreichbare Gasblasenhomogenität aus, die sich gleichmäßig vom Kern der Kunststoffplatte bis zu ihren Rändern hin erstreckt. Bevorzugt ist für die geschäumte Kunststoffplatte eine geschlossenzellige Schaum- und Oberflächenstruktur.

Die erfindungsgemäße geschäumte Kunststoffplatte kann im Spritzgießverfahren in der gewünschten Form hergestellt werden. Bevorzugt ist jedoch eine Extrusion einer ebenen Platte, deren Schäumen zu einem ganz überwiegenden Anteil (> 90%) nach dem Austritt aus der Extrusionsdüse erfolgt und dann im noch nicht vollständig verfestigten Zustand in die gewünschte Profilform gebracht wird. Dabei ist eine endlose Produktion der Platten möglich, die dann durch Ablenkung in die Gebrauchsmaße geschnitten werden kann.

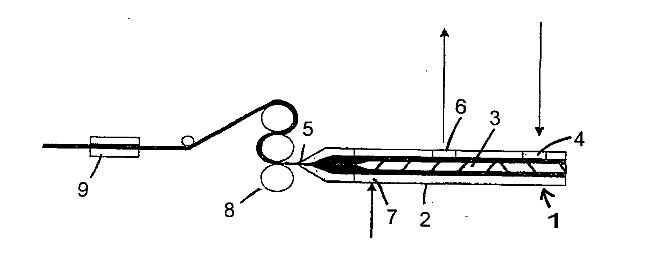

Eine schematische Darstellung einer Extrusionsanlage zur Herstellung von geschäumten Profilplatten ist in der beigefügten Zeichnung dargestellt.

Die Zeichnung zeigt schematisch einen Extruder 1, der ein zylindrisches Gehäuse 2 aufweist, in dem eine Extruderschnecke 3 angeordnet ist. Schematisch dargestellt ist ein erster Zugabeport 4 an einem Aufgabeende des Extruders 1, über den der Extruder mit Feststoffen gefüllt werden kann, die dann durch die Extruderschnecke 3 in Richtung auf eine am gegenüberliegenden Ende des Gehäuses 2 angeordnete Extruderdüse 5 transportiert werden. Während des Transports findet eine Vermischung und Schmelzung der thermoplastischen Bestandteile statt. Das Extrudergehäuse 2 ist im Bereich des Aufgabeports 4 auf eine Temperatur zwischen 180 und 215°C aufgeheizt.

Etwa in der Mitte des Extrudergehäuses befindet sich eine Entgasungsöffnung 6, durch die beim Mischen der Feststoffe in den Extruder 1 eingetragene Luft und andere Gase aus der schmelzenden Masse abführbar sind. Stromabwärts Richtung Extruderdüse 5 befindet sich ein weiterer Zugabeport 7, über den flüssige oder gasförmige Zusatzstoffe, insbesondere physikalische Treibmittel in flüssiger oder gasförmiger Form zugegeben werden können. Die Zugabe erfolgt dabei unter Überdruck, weil an dieser Stelle im Extruder bereits ein erheblicher Überdruck (zwischen 300 und 450 bar) entstanden ist, weil die Extruderschnecke 3 das geschmolzene Material gegen nur eine einen geringen Durchfluss erlaubende Extruderdüse 5 presst. Der Überdruck in dem Extrudergehäuse 2 verhindert weitgehend eine Schaumbildung des Kunststoffmaterials bereits im Extruder 1. Das geschmolzene Kunststoffmaterial tritt daher als flacher Strang aus der als Breitschlitzdüse ausgebildeten Extruderdüse 5 aus und beginnt aufzuschäumen. Dabei durchläuft das Material ein Glättwerk 8 und wird als flacher, aufgeschäumter Strang einer Profilierungseinrichtung 9 zugeführt, in der das bereits teilweise abgekühlte Material einer gewünschten Formgebung, beispielsweise einer sinusförmigen Profilierung, unterworfen wird.

In den ersten Aufgabeport 4 gelangt die PVC-Mischung (Dryblend) in fester Form, beispielsweise als Granulat oder als Pulver. Dieser Mischung wird zugefügt der erfindungsgemäße Anteil an Kalziumcarbonat und ggf. Kreide sowie ein chemisches Treibmittel, das üblicherweise auch in Feststoffform zugegeben wird. Auf diese Weise ist es möglich, ein einstufiges Verfahren auszuführen, in dem die Mischung des Materials mit den Additiven im Extruder 1 selbst erfolgt und dann direkt extrudiert wird. Sofern ein physikalisches Treibmittel in fester Form benutzt wird, beispielsweise in Form von expandierbaren Mikrohohlkugeln, wie sie im Markt unter den Markennamen "Expancell" und "Advancell" bekannt sind, erfolgt die Zugabe des physikalischen Treibmittels auch am ersten Aufgabeport 4 oder durch Zugabe in das PVC-Dryblend.

Wird hingegen ein physikalisches Treibmittel in flüssiger oder gasförmiger Form benutzt, erfolgt die Zugabe am zweiten Aufgabeport 7 im Druckbereich des Extruders 1.

Selbstverständlich kann das erfindungsgemäße Verfahren auch in einem zweitstufigen Verfahren ausgeführt werden, in dem eine Mischung der Bestandteile der Kunststoffzusammensetzung, ggf. einschließlich der Additive, erfolgt, beispielsweise mit einer Mischschnecke oder als Dryblend. Dabei kann das Kunststoffmaterial bereits vorerwärmt und plastifiziert werden. Auch bei dem zweistufigen Verfahren besteht die Möglichkeit, gewisse Additive der ggf. plastifizierten Kunststoffmischung erst über den Aufgabeport 4 des Extruders 1 zuzumischen.

### Beispiel 1:

Die Bestandteile dieses Beispiels sind

| | |
|---|---|
| PVC | 100 Teile |
| Styrol-Maleinsäureanhydrid-Copolymer | 35 Teile |
| Chloriertes Polyethylen | 16 Teile |
| Verarbeitungsstabilisator | 2,5 Teile |
| Gleitmittel | 1,1 Teile |
| CaCO₃ | 0,12 Teile |
| Pentan | 0,20 Teile |
| Azadicarbonamid | 0,65 Teile |

Das Kunststoffmaterial besteht gemäß diesem Ausführungsbeispiel aus PVC, SMA und chloriertem Polyethylen. Dieses Material wird im Extruder aufgeschmolzen und bei ca. 170°C durch die Extrusionsdüse 5 extrudiert. Zur Stabilisierung des Kunststoffmaterials sind 2,5 Teile Verarbeitungsstabilisator und 1,1 Teile Gleitmittel zugegeben.

Pentan ist das physikalische Treibmittel, das über den zweiten Aufgabeport 7 zugegeben wird. Das chemische Treibmittel Azadicarbonamid wird in dem einstufigen Verfahren über den ersten Aufgabeport 4 zugemischt.

Die Zugabe des erfindungsgemäßen CaC03 erfolgt ebenfalls über den ersten Zugabeport 4.

### Beispiel 2:

Die im Beispiel 2 verwendeten Anteile sind

| | |
|---|---|
| PVC | 100 Teile |
| AMSAN (α-Methylstyrol-Acrylnitril-Copolymer) | 20 Teile |
| Butadien-Schlagzähmodifier | 16 Teile |
| Verarbeitungsstabilisator | 2,9 Teile |
| Gleitmittel | 1,3 Teile |
| CaCO₃ | 0,10 Teile |
| Kohlenwasserstoff-Mikrosphären | 0,20 Teile |
| Natriumhydrogencarbonat | 0,80 Teile |

Als chemisches Treibmittel wird in diesem Ausführungsbeispiel Natriumhydrogencarbonat verwendet. Das physikalische Treibmittel wird durch expandierbare Mikrohohlkugeln gebildet, die auf ihr eingeschlossenen Volumens an Kohlenwasserstoffen bei erhöhter Temperatur expandieren und so für ein physikalisches Aufschäumen des Kunststoffmaterials sorgen.

### Beispiel 3:

Die verwendete Zusammensetzung gemäß diesem Beispiel ist:

| | |
|---|---|
| PVC | 100 Teile |
| ABS | 45 Teile |
| NBR teilvernetzt | 6 Teile |
| Verarbeitungsstabilisator | 2,9 Teile |
| Gleitmittel | 1,5 Teile |
| CaCO₃ | 0,25 Teile |
| Advancell | 0,25 Teile |
| Natriumhydrogencarbonat | 0,85 Teile |

Auch bei dieser veränderten PVC-Zusammensetzung werden expandierbare Mikrokugeln als physikalisches Treibmittel und Natriumhydrogencarbonat als chemisches Treibmittel verwendet.

### Beispiel 4:

Die Zusammensetzung gemäß diesem Ausführungsbeispiel lautet:

| | |
|---|---|
| PVC | 100 Teile |
| PMMA | 160 Teile |
| Acrylat-Schlagzähmodifier | 16 Teile |
| Verarbeitungsstabilisator | 2,0 Teile |
| Phenolische Antioxidantien | 0,2 Teile |
| Gleitmittel | 1,0 Teile |
| CaC0₃ | 0,40 Teile |
| Stickstoff | 0,10 Teile |
| Oxibisbenzolsulfohydrazid | 0,60 Teile |

Dieses Ausführungsbeispiel macht deutlich, dass auch weitere Additive der Kunststoffmischung zugegeben werden können, wie die phenolischen Antioxidantien. Als physikalisches Treibmittel dient hier Stickstoff, als chemisches Treibmittel Oxibisbenzolsulfohydrazid.

Neben dem erwähnten chemischen Treibmittel kommen auch andere übliche chemische Treibmittel, beispielsweise Natriumbicarbonat und/oder Treibmittelmischungen, infrage.

Geeignete physikalische Treibmittel sind neben Stickstoff und Kohlendioxid gasförmige Kohlenwasserstoffe und Kohlenwasserstoffgemische.

Als Wärmestabilisatoren und Verarbeitungsstabilisatoren kommen beispielsweise Metallseife, insbesondere Pb-, Ba-, Ca- und Zn-Stearate, sowie Organo-Zinnverbindungen infrage. Die Metallseifen können zugleich auch als Gleitmittel fungieren. Die Zugabe der Metallseifen erfolgt vorzugsweise in einer Konzentration zwischen 1 und 5 %, die Zugabe der Organo-Zinnverbindung vorzugsweise zwischen 1 und 3 %.

Es ist üblich, dass PVC-Formmassen durch Organo-Zinnverbindungen stabilisiert werden. Diese Organo-Zinnverbindungen sind in der Formmasse nicht mit Wasser verträglich, sodass das preiswerte Wasser nicht als physikalisches Treibmittel für die Herstellung der erfindungsgemäßen Kunststoffplatten verwendbar ist.

Für die physikalische Dichteverringerung können allein oder zusätzlich ferner poröse Füllstoffe verwendet werden, die in ihren Poren erhebliche Gasmengen in die Polymermasse einbringen und so die Dichte der Polymermasse herabsetzen können.

Wie im Kunststoffbereich üblich sind alle Prozentangaben Gew.% und die Angaben "Teile" beziehen sich auf Gew.-Anteile.

## Patentansprüche

1. Verfahren zur Herstellung einer geschäumten Kunststoffplatte aus PVC oder aus Blends aus PVC mit PVC-C, PVC mit styrolhaltigen Copolymeren oder PVC mit Polyacrylaten, wobei der PVC-Anteil mindestens 10 % beträgt und die Kunststoffplatte eine geschlossenzellige Struktur und eine Dichte < 70 % der Dichte der ungeschäumten Formmasse aufweist, **dadurch gekennzeichnet, dass** der Formmasse wenigstens ein chemisches Treibmittel und wenigstens ein physikalisches Treibmittel sowie Kalziumcarbonat mit einer spezifischen Oberfläche von ≥ 36 m²/cm³ zugesetzt wird.

2. Verfahren nach Anspruch 1, **dadurch gekennzeichnet, dass** die Kunststoffplatte durch Extrudieren hergestellt wird.

3. Verfahren nach Anspruch 2, **dadurch gekennzeichnet, dass** die Kunststoffplatte nach dem Extrudieren zu einer Profilform geformt wird.

4. Verfahren nach einem der Ansprüche 1 bis 3, **dadurch gekennzeichnet, dass** das Verhältnis von chemischem Treibmittel zu physikalischem Treibmittel auf Gewichtsbasis ≥ 3 beträgt.

5. Verfahren nach Anspruch 4, **dadurch gekennzeichnet, dass** das Verhältnis von chemischem Treibmittel zu physikalischem Treibmittel auf Gewichtsbasis ≥ 5 beträgt.

6. Verfahren nach einem der Ansprüche 1 bis 5, **dadurch gekennzeichnet, dass** das Kalziumcarbonat mit einer spezifischen Oberfläche ≥ 50 m²/cm³ zugesetzt wird.

7. Verfahren nach einem der Ansprüche 1 bis 5 **dadurch gekennzeichnet, dass** das zugesetzte Kalziumcarbonat gefälltes Kalziumcarbonat mit einer spezifischen Oberfläche ≥ 40 m²/cm³ ist.

8. Verfahren nach Anspruch 7, **dadurch gekennzeichnet, dass** dem gefällten Kalziumcarbonat natürliche Kreide mit einer spezifischen Oberfläche ≥ 36 m²/cm³ zugesetzt wird.

9. Verfahren nach einem der Ansprüche 1 bis 8, **dadurch gekennzeichnet, dass** das Aufschäumen zu mindestens 80 % nach dem Verlassen der Extrusionsdüse (5) vorgenommen wird.

10. Verfahren nach einem der Ansprüche 1 bis 9, **dadurch gekennzeichnet, dass** als physikalische Treibmittel Stickstoff, Kohlendioxid, gasförmige Kohlenwasserstoffe, gasförmige Kohlenwasserstoffgemische oder expandierbare Mikrokugeln verwendet werden.

11. Verfahren nach einem der Ansprüche 1 bis 10, **dadurch gekennzeichnet, dass** der Formmasse wenigstens eine Organo-Zinnverbindung als Stabilisator vor der Zugabe der Treibmittel zugegeben wird.

12. Verfahren nach Anspruch 11, **dadurch gekennzeichnet, dass** ein wasserfreies physikalisches Treibmittel verwendet wird.

13. Geschäumte Kunststoffplatte, herstellbar mit einem Verfahren nach einem der Ansprüche 1 bis 12.

## Claims

1. Process for the production of a foamed plastics sheet made of PVC or of blends made of PVC with PVC-C, PVC with styrene-containing copolymers or PVC with polyacrylates, where the PVC content is at least 10% and the plastics sheet has a closed-cell structure and a density < 70% of the density of the unfoamed moulding composition, **characterized in that** at least one chemical blowing agent and at least one physical blowing agent, and also calcium carbonate with a specific surface area ≥ 36 m²/cm³, is added to the moulding composition.

2. Process according to Claim 1, **characterized in that** the plastics sheet is produced by extrusion.

3. Process according to Claim 2, **characterized in that** the plastics sheet is moulded to a profile shape after extrusion.

4. Process according to any of Claims 1 to 3, **characterized in that** the ratio by weight of chemical blowing agent to physical blowing agent is ≥ 3.

5. Process according to Claim 4, **characterized in that** the ratio by weight of chemical blowing agent to physical blowing agent is ≥ 5.

6. Process according to any of Claims 1 to 5, **characterized in that** the specific surface area of the calcium carbonate added is ≥ 50 m²/cm³.

7. Process according to any of Claims 1 to 5, **characterized in that** the calcium carbonate added is precipitated calcium carbonate with specific surface area ≥ 40 m²/cm³.

8. Process according to Claim 7, **characterized in that** natural chalk with specific surface area ≥ 36 m²/cm³ is added to the precipitated calcium carbonate.

9. Process according to any of Claims 1 to 8, **characterized in that** the foaming process is undertaken to an extent of at least 80% after discharge from the extrusion die (5).

10. Process according to any of Claims 1 to 9, **characterized in that** nitrogen, carbon dioxide, gaseous hydrocarbons, gaseous hydrocarbon mixtures or expandable microspheres are used as physical blowing agents.

11. Process according to any of Claims 1 to 10, **characterized in that** at least one organotin compound is added as stabilizer to the moulding composition prior to addition of the blowing agents.

12. Process according to Claim 11, **characterized in that** a water-free physical blowing agent is used.

13. Foamed plastics sheet that can be produced by a process according to any of Claims 1 to 12.

## Revendications

1. Procédé pour la réalisation d'une plaque en matière plastique expansée en PVC ou en mélange de PVC avec PVC-C, PVC avec des copolymères contenant du styrène ou PVC avec des polyacrylates, dans lequel la part de PVC s'élève à au moins 10 % et la plaque en matière plastique présente une structure à cellules fermées et une densité < 70 % de la densité de la masse moulée non expansée, **caractérisé en ce que** l'on ajoute à la masse moulée au moins un agent propulseur chimique et au moins un agent propulseur physique ainsi que du carbonate de calcium avec une superficie spécifique ≥ 36 m²/cm³.

2. Procédé selon la revendication 1, **caractérisé en ce que** la plaque en matière plastique est réalisée par extrusion.

3. Procédé selon la revendication 2, **caractérisé en ce que** la plaque en matière plastique est mise sous la forme d'un profilé après l'extrusion.

4. Procédé selon l'une des revendications 1 à 3, **caractérisé en ce que** la relation de l'agent propulseur chimique sur l'agent propulseur physique est ≥ 3, en se basant sur le poids.

5. Procédé selon la revendication 4, **caractérisé en ce que** la relation de l'agent propulseur chimique sur l'agent propulseur physique est ≥ 5, en se basant sur le poids.

6. Procédé selon l'une des revendications 1 à 5, **caractérisé en ce que** le carbonate de calcium est ajouté avec une superficie spécifique ≥ 50 m²/cm³.

7. Procédé selon l'une des revendications 1 à 5, **caractérisé en ce que** le carbonate de calcium ajouté est du carbonate de calcium précipité avec une superficie spécifique ≥ 40 m²/cm³.

8. Procédé selon la revendication 7, **caractérisé en ce que** l'on ajoute au carbonate de calcium précipité de la craie naturelle avec une superficie spécifique > 36 m²/cm³.

9. Procédé selon l'une des revendications 1 à 8, **caractérisé en ce que** l'expansion est exécutée à raison d'au moins 80 % après avoir quitté la buse d'extrusion (5).

10. Procédé selon l'une des revendications 1 à 9, **caractérisé en ce que** l'on utilise à titre d'agent propulseur physique de l'azote, du dioxyde de carbone, des hydrocarbures sous forme gazeuse, des mélanges d'hydrocarbures sous forme gazeuse, ou des micro-billes expansibles.

11. Procédé selon l'une des revendications 1 à 10, **caractérisé en ce que** l'on ajoute à la masse moulée au moins un composé organo-étain à titre de stabilisateur avant d'ajouter l'agent propulseur.

12. Procédé selon la revendication 11, **caractérisé en ce que** l'on utilise un agent propulseur physique dépourvu d'eau.

13. Plaque de matière plastique expansée, susceptible d'être produite avec un procédé selon l'une des revendications 1 à 12.
